**Europäisches Patentamt**

**European Patent Office**

**Office européen des brevets**

(19)

(11) Veröffentlichungsnummer: **0 052 736**
**B1**

(12) **EUROPÄISCHE PATENTSCHRIFT**

(45) Veröffentlichungstag der Patentschrift:
**06.06.84**

(21) Anmeldenummer: **81108109.0**

(22) Anmeldetag: **09.10.81**

(51) Int. Cl.³: **A 61 C 17/02,** A 61 H 13/00,
B 05 B 1/16

(54) **Handgriff für ein Mundspülgerät.**

(30) Priorität: **22.11.80 DE 3044025**

(43) Veröffentlichungstag der Anmeldung:
**02.06.82 Patentblatt 82/22**

(45) Bekanntmachung des Hinweises auf die Patenterteilung:
**06.06.84 Patentblatt 84/23**

(84) Benannte Vertragsstaaten:
**AT BE CH FR GB IT LI LU NL SE**

(56) Entgegenhaltungen:
**EP - A - 0 011 869**
**DE - A - 1 466 963**
**DE - A - 2 449 366**
**DE - A - 2 746 453**
**DE - A - 2 852 042**
**DE - B - 2 050 687**
**DE - B - 2 109 006**
**DE - B - 2 200 083**
**DE - B - 2 346 677**
**DE - B - 2 819 345**
**US - A - 3 227 158**
**US - A - 4 174 571**

(73) Patentinhaber: **Blendax-Werke R. Schneider GmbH & Co., Rheinallee 88, D-6500 Mainz (DE)**

(72) Erfinder: **Klein, Horst, Schwarzwaldstrasse 6, D-6233 Kelkheim-Fischbach (DE)**

## Beschreibung

Die Erfindung betrifft einen Handgriff für ein Mundspülgerät, ausgestattet mit einer Flüssigkeitszufuhr und einem auf einen Haltegriff aufsteckbaren Spritzdüsenteil, wobei sowohl der Haltegriff als auch das Spritzdüsenteil mit zwei parallellaufenden Kanälen ausgestattet sind, die in getrennten, verschiedenartigen Spritzdüsen enden.

Mit Spritzdüsen versehene Haltegriffe für Mundspülgeräte sind bereits seit längerem in den verschiedensten Ausführungsformen bekanntgeworden, beispielsweise durch die DE-B-2 050 687, 2 200 083 und 2 346 677 sowie die DE-A-1 466 963 und 2 746 453. Diese Düsen sind jeweils in der Lage, entweder einen einzelnen Sprühstrahl oder eine Vielzahl von Sprühstrahlen austreten zu lassen. Beide Ausführungsformen bringen Vor- und Nachteile mit sich:
So ist es zweckmäßig, eine einstrahlige Düse dann zu verwenden, wenn eine gute Reinigung der Interdentalräume erzielt werden soll. Die Verwendung einer solchen Düse, wie sie beispielsweise in der US-A-3 227 158 beschrieben wird, ist jedoch dann unzweckmäßig, wenn gleichzeitig eine Zahnfleischmassage ausgeübt werden soll, da der sich daraus ergebene Druck auf das Zahnfleisch punktuell zu stark ist und deshalb zu Schmerzempfindungen führen kann. Für eine Zahnfleischmassage ist also die Anwendung eines mehrstelligen Wasserstrahles geeignet, was jedoch eine gegenüber einem einstrahligen Wasserstrahl verringerte Reinigung der Interdentalräume zur Folge hat.

Aus der deutschen DE-B-2 109 006 ist bereits ein Handgerät zur Zahn- und Mundpflege bekannt, das sowohl mit einer Aufsteckzahnbürste, die durch einen Hydraulikmotor betrieben wird, als auch, alternativ dazu, mit einer Aufsteckdüse versehen werden kann, wobei die Umschaltung vom Betrieb der Zahnbürste zum Betrieb der Düse mittels eines Schiebeschalters erfolgt.

Die DE-A-2 449 366 beschreibt eine Mundddusche mit einer verbesserten Ventilkonstruktion.

Beide Vorrichtungen sind nicht zur Umschaltung auf verschiedenartige Spritzdüsen vorgesehen und geeignet.

Die US-PS 4 174 571 offenbart eine Vorrichtung der eingangs genannten Art zur Reinigung -von Zähnen, mittels dieser gleichzeitig durch zwei parallellaufende Kanäle ein Wasserstrahl oder teilchenförmiges Poliermittel in einem Luftstrom abgegeben werden können.

Eine Umschaltmöglichkeit auf zwei verschiedenartige Spritzdüsen ist dieser Vorveröffentlichung nicht zu entnehmen.

Aus der DE-AS-2 852 042 ist weiterhin eine Vorrichtung zur Abgabe wenigstens eines Fluidstrahles bekannt, die vorwiegend als Reinigungsdüse für Fahrzeugscheiben dienen soll, jedoch auch, nach den Angaben in der Beschreibung, als Funktionskopf von Mund-, Körperoder Gesichtsreinigungsduschen eingesetzt werden kann.

Die Fig. 13 und 14 zeigen Ausgestaltungen, die eine wechselweise Umschaltung für 2 Fluidstrahlen gestatten sollen. Diesen Figuren läßt sich jedoch die Ausgestaltung der Umschaltmöglichkeit nicht in hinreichend deutlicher Form entnehmen, in der skizzierten Form dürften Dichtigkeitsprobleme auftreten.

Diese Düsen weisen zwar zwei Kanäle auf, die jedoch nicht in unterschiedlichen Düsenköpfen enden und deshalb zur Lösung der erfindungsgemäß gestellten Aufgabe nichts beizutragen vermögen.

Ziel der vorliegenden Erfindung war es daher, eine Möglichkeit zu schaffen, eine universal anwendbare Spritzdüse für Mundspülgeräte wie Munduschen zu entwickeln, die sowohl eine Reinigung der Zahnzwischenräume als auch eine optimale Massage des Zahnfleisches mittels eines Handgriffes gestattet, einen verhältnismäßig einfachen konstruktiven Aufbau besitzt und damit auch wirtschaftlich herstellbar ist.

Die Lösung dieser Aufgabe besteht darin, daß die im Handgriff angeordneten, parallellaufenden Kanäle, in einem längsverschiebbaren Einsatz angeordnet sind, und jeweils einer der Kanäle mittels eines Schalters durch Verschieben des Einsatzes in Verbindung mit dem Flüssigkeitseinlaß im Haltegriff gebracht werden kann, und daß der eine Kanal in einer einstrahligen und der andere Kanal in einer mehrstrahligen Spritzdüse endet.

Beim Betrieb der Munddusche kann der Flüssigkeitseintritt durch die Verschiebung des Kanaleinsatzes mittels des Schalters jeweils so gesteuert werden, daß der Wasseraustritt entweder in einem Strahl durch die einstrahlige Düse oder in mehreren Strahlen durch die andere Düse erfolgen kann. So ist es möglich, eine leicht umschaltbare, einfach konstruierte, allen zahnmedizinischen Anforderungen gerecht werdende Munddusche herzustellen. Die Gestaltung der Munddusche hinsichtlich Motor, Pumpe, Wasserbehälter, etc. ist bekannt und nicht Gegenstand der Erfindung.

Das gleiche gilt im Prinzip für die jeweilige Ausgestaltung der Einzel- bzw. Mehrfachdüsen. So kann die Einfachdüse beispielsweise nach der in der bereits erwähnten US-A-3 227 158 beschriebenen Form gestaltet sein.

Geeignete Mehrfachdüsen sind beispielsweise in den ebenfalls bereits erwähnten DE-B-2 050 687 und 2 200 083 beschrieben.

Eine besonders geeignete Form der Mehrfachdüse kann so ausgestaltet sein, daß sie einen beweglichen, leicht konisch ausgebildeten Einsatz aufweist, der in die Düsenöffnung paßt, und an seinem in das Innere der Düse gerichteten Ende eine kegelstumpfförmige Aussparung aufweist, die ihre Entsprechung in einem kegelförmigen Vorsprung an der Düseninnenwand findet. Die Flüssigkeitsimpulse bzw. die Impulsfolgefrequenz können in ebenfalls bekannter Form eingestellt sein.

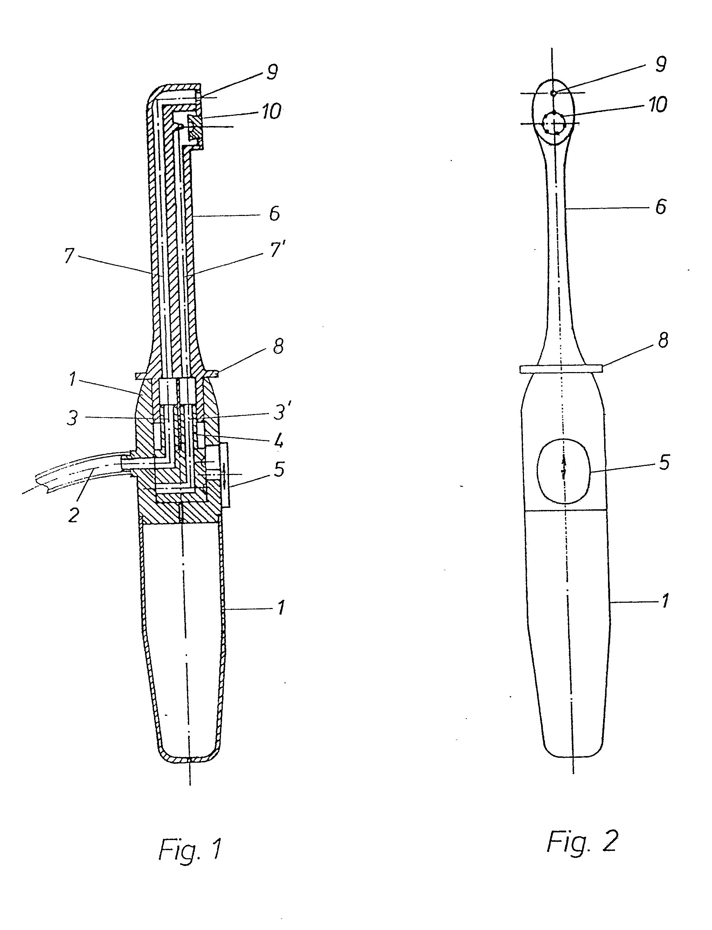

In Fig. 1 wird ein Querschnitt eines erfindungsgemäß ausgestalteten Handgriffs für eine Munddusche wiedergegeben.

Fig. 2 stellt eine Frontalansicht des Handgriffes mit aufgesteckter Düse dar.

Eine Haltegriff (1), der mit einer Flüssigkeitszufuhr (2) ausgestattet ist, enthält zwei parallellaufende Flüssigkeitskanäle (3, 3'), die in einem durch einen Schalter (5) längsverschiebbaren Einsatz (4) angeordnet sind, wobei jeweils einer der Flüssigkeitskanäle (3 und 3') mittels Verschieben des Einsatzes (4) mit der Flüssigkeitszufuhr (2) verbunden werden kann. Auf den Haltegriff (1) aufgesetzt ist ein Düsenrohr (6), das ebenfalls zwei parallellaufende Kanäle (7, 7') aufweist, die als Fortsetzung der Kanäle (3 und 3') anzusehen sind. Das Düsenrohr (6) ist auf dem Haltegriff (1) vorzugsweise drehbar angeordnet, beispielsweise mittels einer Rändelschraube (8). Der Kanal (3 bzw. 7) führt zu der am Kopfende des Düsenrohres (6) angeordneten Einfachdüse (9), der Kanal (3' bzw. 7') zu der Mehrfachdüse (10).

## Patentanspruch

Handgriff für ein Mundspülgerät, ausgestattet mit einer Flüssigkeitszufuhr (2) und einem auf einen Haltegriff (1) aufsteckbaren Spritzdüsenteil (6), wobei sowohl der Haltegriff (1) als auch das Spritzdüsenteil (6) mit zwei parallellaufenden Kanälen (3, 3') ausgestattet sind, die in getrennten, verschiedenartigen Spritzdüsen (9, 10) enden, dadurch gekennzeichnet, daß die im Haltegriff (1) angeordneten, parallellaufenden Kanäle (3, 3') in einem längsverschiebbaren Einsatz (4) angeordnet sind, und jeweils einer der Kanäle (3, 3') mittels eines Schalters (5) durch Verschiebung des Einsatzes (4) in Verbindung mit dem Flüssigkeitseinlaß (2) im Haltegriff (1) gebracht werden kann, und daß der eine Kanal (3, 7) in einer einstrahligen (9) und der andere Kanal (3', 7') in einer mehrstrahligen Spritzdüse (10) endet.

## Claim

Handle for a mouth wash device, provided with a liquid intake (2) and a spray nozzle part (6) attachable to the handle (1), both said handle (1) and said spray nozzle part (6) being provided with two parallel canals (3, 3') ending in separated, different spray nozzles openings (9, 10), characterized by the fact that the parallel canals (3, 3') being situated in the handle (1) are arranged in a longitudinally adjustable insert (4), and each one of said two canals (3, 3') may be communicated with said liquid intake (2) in the handle (1) by means of a switch (5) by adjustment of the insert (4), and that one canal (3, 7) leads to a single-jet (9) and the other canal (3', 7') leads to a multi-jet spray nozzle (10).

## Revendication

Manche pour un appareil à rincer la bouche pourvu d'une amenée de liquide (2) et un élément de pulvérisateur (6) à fixer sur un manche (1); et non seulement le manche (1) mais encore l'élément de pulvérisateur (6) sont pourvus avec deux orifices en parallèle (3, 3') qui débouchent sur des pulvérisateurs séparés et divers, caractérisé par le fait que les orifices (3, 3') en parallèle arrangés dans le manche (1) sont placés dans une pièce d'insertion (4) ajustable de manière longitudiale et chaque fois un des orifices (3, 3') peut être relié avec l'amenée de liquide (2) par déplacement de la pièce d'insertion (4) à l'aide d'un commutateur (5) et que l'un des orifices (3, 7) débouche sur un pulvérisateur à jet unique et l'autre (3', 7') sur un pulvérisateur à jets multiples (10).

Fig. 1

Fig. 2